# DEMANDE DE BREVET EUROPEEN

(11) **EP 1 596 155 A1**
(43) Date de publication de la demande: **16.11.2005**
(21) Numéro de dépôt: 04011019.9
(22) Date de dépôt: 10.05.2004
(51) Int. Cl.: G01B 5/00

(54) **Appareil de mesure à force constante**

(71) Demandeur: SCHNYDER & CIE. S.A., CH-2735 Bévilard (CH)
(72) Inventeur: M. Wüst, Robert, 2822 Courroux (CH)
(74) Mandataire: Gresset, Jean

(57) **Abrégé**

Appareil de mesure comportant :
- un socle (10),
- une structure verticale (12),
- une échelle de mesure (14) fixée à la structure (12),
- des organes de guidage (12a) associés à la structure (12),
- un chariot (16) monté mobile sur les organes de guidage (12a) et comportant une touche de mesure (20),
- un contrepoids (28),
- des moyens d'entraînement du chariot (16) comprenant un fil (36, 37) en boucle relié au chariot (16) et au contrepoids (18), et
- une paire de poulies (22, 24) disposées sur la structure verticale, l'une en haut, l'autre en bas, et sur lesquelles passe le fil (26).

La pression de la touche de mesure est définie par une charge (41, 42), définissant ainsi par son poids la force appliquée par la touche (20) au point de mesure.

## Description

La présente invention se rapporte aux appareils de mesure, du type comportant :
- un socle,
- une structure verticale,
- une échelle de mesure fixée à la structure,
- des organes de guidage associés à la structure,
- un chariot monté mobile sur les organes de guidage et comportant une touche de mesure,
- un contrepoids,
- des moyens d'entraînement du chariot comprenant un fil en boucle relié au chariot et au contrepoids, et
- une paire de poulies disposées sur la structure verticale, l'une en haut, l'autre en bas, et sur lesquelles passe le fil.

Un appareil de ce type est, par exemple, décrit dans le document EP 1,096,220. Dans ce type d'appareil, la touche de mesure est amenée au contact de la pièce à mesurer et appliquée contre celle-ci avec une pression définie par un ressort. Cette pression peut varier en fonction de la manière dont l'opérateur travaille. La mesure ainsi faite peut donc être affectée, ce d'autant plus que la pièce mesurée est souple. Le but de la présente invention est de pallier cet inconvénient. A cet effet, l'appareil comporte, en outre, au moins une charge pondérale et des moyens pour appliquer la force engendrée par cette charge sur la touche, définissant ainsi par son poids la force appliquée au point de mesure. De la sorte, la pression reste constante, étant définie par le poids de la charge.

Dans ce type d'appareil, la mesure doit généralement pouvoir être faite contre une surface ouverte vers le bas ou vers le haut. La touche doit ainsi pouvoir être appliquée avec une force de contact orientée vers le haut ou vers le bas. Pour obtenir ces deux types de forces, les moyens pour appliquer la force comportent :
- une deuxième paire de poulies disposées sur la structure verticale, l'une en haut, l'autre en bas, et
- un deuxième fil muni de deux organes de soutien, le fil et les organes formant ensemble une boucle passant sur les poulies de la deuxième paire.

En outre, la charge comprend deux masselottes, chacune d'elles coopérant avec l'un des organes de soutien, disposées au voisinage l'une du chariot, l'autre du contrepoids, l'une ou l'autre des masselottes coopérant avec le chariot ou avec le contrepoids selon que la touche de mesure est en appui contre une surface de contact tournée vers le haut ou vers le bas.

Afin d'assurer des conditions de travail optimales, l'appareil est équipé de moyens de mesure automatisés. Il comporte ainsi un moteur relié cinématiquement à l'une des poulies de la deuxième paire pour commander l'entraînement du deuxième fil et un dispositif de commande du moteur agencé de manière à ce que le moteur soit arrêté lorsque la touche est en appui contre une surface à mesurer, de telle sorte que la pression de contact de la touche contre la surface soit définie par la masse de la masselotte coopérant soit avec le chariot, soit avec le contrepoids.

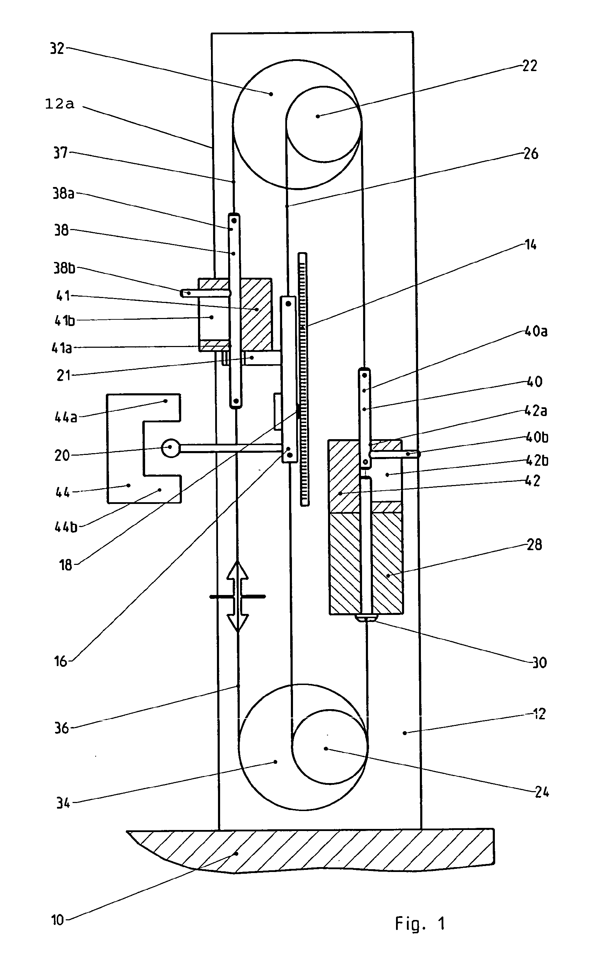

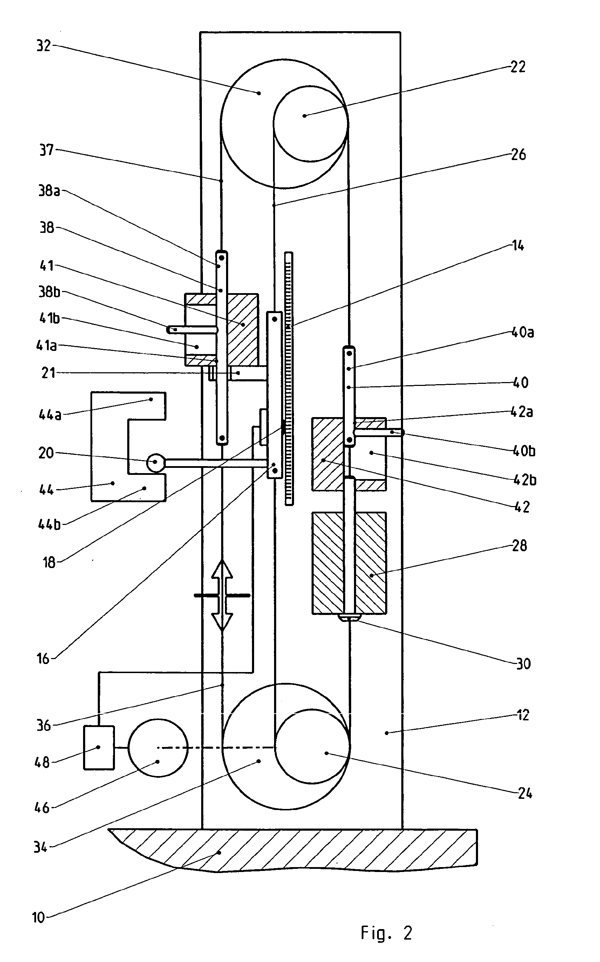

D'autres avantages et caractéristiques de l'invention ressortiront de la description qui va suivre, faite en regard du dessin annexé, dans lequel les figures 1 et 2 représentent, de manière schématique, un appareil selon l'invention, respectivement en position d'équilibre et en position de mesure.

L'appareil représenté au dessin comprend, de manière classique, un socle 10 et une structure verticale formée d'une colonne 12. Cette dernière porte une échelle de mesure 14. Des organes de guidage, schématiquement représentés par les arêtes 12a de la structure 12 et comportant généralement des rails non représentés au dessin, sont fixés à la colonne 12. Un chariot 16, monté mobile en translation sur ces organes de guidage, peut s'y déplacer selon un axe vertical. Il porte un capteur 18 coopérant avec l'échelle 14 pour effectuer la mesure, et une touche 20 destinée à être mise en contact avec la pièce à mesurer. Le chariot 16 est muni d'une plate-forme 21 dont la fonction sera précisée plus loin.

La colonne 12 porte de deux poulies 22 et 24, respectivement disposées dans ses parties haute et basse et sur lesquelles passe un fil 26, avantageusement un câble, relié au chariot 16 par ses deux extrémités. Un contrepoids 28 est rendu solidaire du fil 26 par une attache 30 fixée à ce dernier. La masse du contrepoids 28 est ajustée pour être égale à celle du chariot 16. Ce dernier pourrait être déplacé en agissant sur le fil 26 ou sur l'une des poulies 22 ou 24. Comme expliqué ci-après, c'est une autre solution qui est appliquée ici.

Dans les dispositifs connus, le fil 26 est relié au chariot 16 par un organe élastique. C'est ce dernier qui définit la pression appliquée par la touche contre l'objet à mesurer. La précision de la mesure peut dépendre de manière sensible de cette pression, laquelle peut varier selon la manière dont se fait l'entraînement du chariot.

L'appareil selon l'invention est équipé d'un dispositif permettant d'engendrer une force parfaitement constante. Il comprend deux autres poulies 32 et 34, respectivement montées pivotantes en haut et en bas de la colonne 12. Deux fils 36 et 37, avantageusement des câbles, forment une boucle, le fil 36 passant sur la poulie 34 et le fil 37 sur la poulie 32.

Ce dispositif comprend, en outre, deux supports 38 et 40 comportant chacun un barreau identifié par la lettre a et aux extrémités desquels sont fixées les extrémités des fils 36 et 37, et une tige perpendiculaire au barreau, identifiée par la lettre b et dont la fonction sera précisée plus loin. Les fils 36 et 37 et les support 38 et 40 forment ensemble une boucle.

Les poulies 32 et 34 sont dimensionnées et disposées de manière à ce que le fil 36 passe au travers du contrepoids 28 et de l'attache 30, le support 40 se trouvant sensiblement dans le prolongement de l'attache 30, alors que le fils 36 et le support 38 se trouvent à côté du chariot 16, le barreau 38a étant engagé librement dans un trou que comporte la plate-forme 21.

Des masselottes 41 et 42, de forme générale cylindrique et munies d'un trou axial identifiée par la lettre a et d'une découpe latérale identifiée par la lettre b, sont respectivement disposées sur les support 38 et 40, leurs barreaux a étant engagés dans les trous a, et les tiges b dans les découpes latérales b. Les découpes 41 b et 42b sont dimensionnées de manière à ce que les masselottes 41 et 42 reposent respectivement sur la plate-forme 21 et sur le contrepoids 28, les tiges b se trouvant au voisinage immédiat de la paroi supérieure de la découpe b, comme on peut le voir sur la figure 1.

Sur le dessin est, en outre, représentée une pièce à mesurer 44 comportant un bras orienté verticalement et deux doigts horizontaux 44a et 44b, entre lesquels se trouve la touche 20.

L'appareil comporte, en outre et représenté schématiquement sur la figure 2, un moteur 46 relié cinématiquement à la poulie 34 et un dispositif de commande 48 relié au moteur 46 pour en assurer l'alimentation électrique et au capteur 18. Le dispositif 48 est agencé de manière à ce que le moteur 46 soit arrêté lorsque le capteur 18 constate que le chariot est fixe en référence à l'échelle 14, et à permettre la rotation du moteur 46 aussi bien dans un sens que dans l'autre. Le dispositif 48, avantageusement constitué d'un ordinateur, peut, en outre, assurer la fonction de détermination et d'affichage de la mesure effectuée.

Pour mesurer la face supérieure du bras inférieur 44b, la touche 20 doit être amenée en contact avec celle-ci, comme cela se voit sur la figure 2. A cet effet, la poulie motrice 34 est entraînée en rotation dans le sens anti-horaire par le moteur 46. Le fil 36 est entraîné et, avec lui, le fil 37 et les deux supports 38 et 40. Par ce mouvement, la tige 40b tend à soulever la masselotte 42 et la tige 38b tend à s'écarter de la masselotte 41, qui repose sur la plate-forme 21. Elle engendre une force sur cette dernière, entraînant avec elle le fil 26 et le chariot 16. Ce dernier descend donc, jusqu'à ce que la touche 20 entre en contact avec la surface supérieure du bras inférieur 44b. Le chariot 16 s'arrête, alors que la poulie 34 continue d'entraîner le fils 36, la tige 40b soulevant la masselotte 42 alors que la tige 38b libère complètement la masselotte 41. Le capteur 18 détecte que le chariot 12 s'est immobilisé et le dispositif 48 commande l'arrêt du moteur 46.

La touche 20 est donc appliquée contre la surface supérieure du bras 44b avec une pression égale au poids de la masselotte 41. La pression exercée par la touche 20 contre la pièce 44 est la même, quelle que soit la position de la poulie 34, dans la mesure où la tige 38b se trouve dans la découpe 41b, sans contact avec la masselotte 41. De la sorte, la précision de la mesure peut être améliorée.

Pour effectuer une mesure de la surface inférieure du bras supérieur 44a, il suffit de faire tourner la poulie 34 dans l'autre sens. La masselotte 42 vient alors prendre appui sur le contrepoids 28 alors que la masselotte 41 est soulevée par la tige 38b, ce qui fait monter le chariot 16, jusqu'à ce que la touche 20 entre en contact avec la surface considérée. C'est alors le poids de la masselotte 42, qui s'additionne au poids du contrepoids 28, ce dernier étant compensé par celui du chariot 16. La masse de la masselotte 42 définira donc la pression de la touche 20 contre le bras 44a de la pièce 44. La masselotte 41 est soutenue par la tige 38b et n'intervient pas dans la mesure.

Si les masses des masselottes 41 et 42 sont égales, la pression qu'elles exercent est égale aussi. Il suffira donc de dimensionner les masselottes 41 et 42 de manière à ce que la pression soit suffisante pour appliquer la touche contre la pièce à mesurer, sans pour autant engendrer de déformation. Typiquement, cette pression peut être égale à 0,05 N, ce qui implique que la masse des masselottes est de 50g.

Il va de soi que cette masse peut être choisie sensiblement plus élevée avec un objet lourd et rigide, ou au contraire plus faible si les pièces à mesurer sont de petites dimensions ou présentent une grande souplesse. Dans tous les cas et quelle que soit la force appliquée, la mesure est parfaitement répétitive, cette force ne variant pas d'une fois à l'autre.

Bien entendu, l'appareil ainsi décrit peut présenter de nombreuses variantes. Ainsi, les câbles peuvent être remplacé par des courroies.

La structure en boucle que forment les fils 36 et 37 et les supports 38 et 40 pourrait être obtenue par d'autres moyens, par exemple par un fil unique fixé par ses extrémités à l'un des supports, l'autre support étant fixé sur le fil dans sa partie médiane. Ici aussi, le fil pourrait être remplacé par une courroie.

L'entraînement de la poulie 34 pourrait aussi se faire manuellement au moyen d'une manivelle associée à l'une des poulies 32 et 34. Dans ce cas, le jeu des tiges 38b et 40b respectivement dans les découpes latérales 41b et 42b devra être suffisant pour prendre en compte la vitesse de réaction de l'utilisateur. Il vaut en effet mieux que les tiges 38b et 40b ne viennent pas s'appuyer sur la masselotte définissant la force de la mesure, ce qui fausserait la mesure.

Il va de soi que la position relative des deux boucles associées respectivement au chariot 16 et au contrepoids 18 d'une part, aux masselottes 41 et 42 d'autre part pourrait être modifiée de manière sensible, en utilisant des poulies de même diamètre, disposées coaxialement, ou encore en plaçant les poulies dans un même plan, la boucle associée aux masselottes 41 et 42 étant inscrite dans la boucle associée au chariot 16.

Quelle que soit la variante utilisée, la précision de la mesure est ainsi sensiblement améliorée, du fait que la pression de la touche est définie par une masse et non par un organe élastique comme c'est généralement le cas.

## Revendications

1. Appareil de mesure comportant :
- un socle (10),
- une structure verticale (12),
- une échelle de mesure (14) fixée à la structure (12),
- des organes de guidage (12a) associés à la structure (12),
- un chariot (16) monté mobile sur les organes de guidage (12a) et comportant une touche de mesure (20),
- un contrepoids (28),
- des moyens d'entraînement du chariot (16) comprenant un fil (36, 37) en boucle relié au chariot (16) et au contrepoids (18), et
- une paire de poulies (22, 24) disposées sur la structure verticale, l'une en haut, l'autre en bas, et sur lesquelles passe le fil (26),
**caractérisé en ce qu'**il comporte, en outre, au moins une charge (41, 42) pondérale et des moyens pour appliquer la force engendrée par cette charge sur ladite touche, définissant ainsi par son poids la force appliquée par la touche au point de mesure.

2. Appareil selon la revendication 1, **caractérisé en ce que** les moyens pour appliquer la force engendrée par la charge comportent :
- une deuxième paire de poulies (32, 34) disposées sur la structure verticale (12), l'une en haut, l'autre en bas, et
- un deuxième fil (36, 37) muni de deux organes de soutien (38, 40), le fil et les organes formant ensemble une boucle passant sur les poulies (32, 34) de la deuxième paire,
et **en ce que** ladite charge comprend deux masselottes (41, 42) chacune d'elles coopérant avec l'un des organes de soutien (38, 40) et disposées au voisinage l'une du chariot (16), l'autre du contrepoids (18), l'une ou l'autre desdites masselottes coopérant avec le chariot (16) ou le contrepoids (18) selon que la touche de mesure (20) est en appui contre une surface de contact tournée vers le haut ou vers le bas.

3. Appareil selon la revendication 2, **caractérisé en ce qu'**il comporte, en outre, un moteur (46) relié cinématiquement à l'une (34) des poulies de la deuxième paire pour commander l'entraînement du deuxième fil (36, 37) et un dispositif de commande (48) du moteur agencé de manière à ce que le moteur (46) soit arrêté lorsque ladite touche (20) est en appui contre une surface à mesurer, de telle sorte que la pression de contact de la touche (20) contre la surface est définie par la masse de la masselotte (41, 42) s'additionnant soit avec celle du chariot (16), soit avec celle du contrepoids (18).
